# EUROPEAN PATENT APPLICATION

(11) **EP 4 624 238 A1**
(43) Date of publication of application: **01.10.2025**
(21) Application number: 25156214.6
(22) Date of filing: 06.02.2025
(51) Int. Cl.: B60L 58/12, B60L 58/15, B60L 58/16, H01M 10/44, H01M 10/48

(54) **CONTROL APPARATUS FOR SECONDARY BATTERY**

(30) Priority: 29.03.2024 JP 2024056017
(71) Applicant: MAZDA MOTOR CORPORATION, Hiroshima 730-8670 (JP)
(72) Inventor: Yamamoto, Takashi, Aki-gun, Hiroshima, 730-8670 (JP); Yamashita, Keisuke, Aki-gun, Hiroshima, 730-8670 (JP)
(74) Representative: von Tietzen und Hennig, Nikolaus

(57) **Abstract**

[Problem] To restrain deterioration of a secondary battery.

[Means for Solution] A control apparatus 1 for a secondary battery 9 includes: a state sensor 120 that detects at least one of an SOC and a temperature of the secondary battery 9; and a controller 100 that determines, based on a detection signal of the state sensor 120, whether or not a first condition is fulfilled that is fulfilled when at least one of the SOC and the temperature is continuously not less than a predetermined value, and controls a charge/discharge current of the secondary battery 9 based on the determination result, and the controller 100 determines, in disconnection of electric power supply to a driving source 3, whether or not the first condition is fulfilled, and restricts, when it is determined that the first condition is fulfilled, a magnitude of the charge/discharge current more than in the case where the first condition is not fulfilled.

## Description

### [Technical Field]

The present invention relates to a control apparatus for a secondary battery.

### [Background Art]

For example, Patent Literature 1 discloses a battery module applicable to an electric vehicle (EV), a hybrid electric vehicle (HEV), and the like.

Specifically, the battery module of Patent Literature 1 mentioned above includes a cell assembly, an upper plate and a lower plate, and a pair of side plates. Herein, the cell assembly includes a plurality of pouch-type battery cells arranged and stacked in one direction. The upper and lower plates respectively cover the upper portion and the lower portion of the cell assembly. Further, the pair of side plates are press fitted or fitted to both ends of the upper plate and the lower plate.

According to Patent Literature 1 mentioned above, provision of the side plates as mentioned above results in formation of a gas capturing space. The formation of the gas capturing space enables, when the inner electrolyte is decomposed due to repetition of charge and discharge, gas generated by the decomposition to be captured. This can prevent a rapid pressure rise in the battery module and then the resulting deformation.

### [Citation List]

### [Patent Literature]

[Patent Literature 1] Japanese Translation of PCT International Application Publication No. 2020-517080

### [Summary of Invention]

### [Problems to be Solved by the Invention]

When a secondary battery for vehicles is left outdoor or the like, there is a possibility that, in the battery cells constituting the secondary battery, gas as disclosed in Patent Literature 1 mentioned above is stored. It is considered that such generation of the gas becomes more significant in situations such as at a higher temperature and at a higher SOC.

When the gas is stored in the battery cells, the gas occasionally prevents the chemical reactions in the battery cells. This causes a possibility that the reaction areas in the battery cells decrease and internal resistances therein rise. This is disadvantageous from various viewpoints such as the battery capacity.

The present invention has been made in view of such circumstances, and an object thereof is to restrain deterioration of a secondary battery.

### [Means for Solving the Problems]

A first aspect of the present invention relates to a control apparatus for a secondary battery, the secondary battery including a plurality of battery cells, the control apparatus supplying electric power from the plurality of battery cells to a driving source of a vehicle. The control apparatus includes: a state sensor that detects at least one of an SOC and a temperature of the secondary battery; and a controller configured to determine, based on a detection signal of the state sensor, whether or not a first condition is fulfilled, the first condition being fulfilled when at least one of the SOC and the temperature is continuously not less than a predetermined value, and to control a charge/discharge current of the secondary battery based on a result of the determination, wherein the controller is further configured to determine, in disconnection of electric power supply to the driving source, whether or not the first condition is fulfilled, and restricts, when it is determined that the first condition is fulfilled, a magnitude of the charge/discharge current more than in a case where the first condition is not fulfilled.

The term "charge/discharge current" designates at least one of a charge current and a discharge current. The term "in disconnection of electric power supply to the driving source" may correspond to a state during which the vehicle is non-travelling and parked. No power source may be connected to the driving source in this state. For instance, the vehicle may comprise an IG switch ("ignition switch" or also called "power switch") for switching an operation mode of the vehicle between "IG-ON" and "IG-OFF". The term "in disconnection of electric power supply to the driving source" may correspond to the IG-OFF state. Restricting the magnitude of the charge/discharge current when the first condition is fulfilled can be performed during an IG-ON and/or IG-OFF state.

The inventors have tried to discharge, by causing the battery cells to expand and contract through charge and discharge, gas stored in the battery cells to the outside through the electrodes. However, this is disadvantageous since, depending on a setting of what is called a "C-rate", electrodeposition of Li and the like occurs. In other words, a system that discharges gas from the inside of the battery cells without deposition being caused, if any, is advantageous.

To this end, the inventors have employed a configuration to restrict high rate charge and discharge when the first condition which implies generation of gas is satisfied as in the first aspect. Thereby, the gas can be discharged from the inside of the battery cells without deposition being caused. As a result, deterioration of the secondary battery can be restrained.

Moreover, according to a second aspect of the present invention, the first condition may not be fulfilled when an internal resistance value of the secondary battery continuously decreases, and when restriction of the magnitude of the charge/discharge current is started, the controller may be configured to acquire the internal resistance value of the secondary battery after start of the driving source, and to update determination of the first condition based on an acquired value of the internal resistance value, and to cancel, when the first condition is not fulfilled after update, the restriction of the magnitude of the charge/discharge current.

It is considered that, when gas is stored in the battery cells, the gas prevents the chemical reactions, and consequently, the internal resistance value of the secondary battery increases. In other words, it is considered that, when the gas is discharged from the battery cells, the internal resistance value decreases. It is considered that, when the internal resistance value continuously decreases, the magnitude of the charge/discharge current no longer needs to be restricted.

Therefore, according to the second aspect, after the start of the driving source with electric power, the controller monitors a transition of the internal resistance value, and redetermines the first condition based on the internal resistance value changing with the elapse of time. Thereby, a period during which the magnitude of the charge/discharge current is restricted can be made as short as possible. Thereby, both of restraining the deterioration of the secondary battery and restraining the charge period of the secondary battery can be made compatible.

According to a preferred aspect of the invention, the state sensor may further include a resistance sensor for measuring the internal resistance of the second battery. The resistance sensor may be electrically connected to the controller to input a detection signal of the measured internal resistance into the controller.

It is further possible that the controller is further configured to, based on the current internal resistance value measured by the sensor, estimate the execution time required for decreasing the internal resistance value down to an allowable value, for instance a predetermined value at which the restriction of charging/discharging current becomes not needed. The controller may be configured to prestore a map or a model in which the detection value of each of the state sensors such as the resistance sensor and the execution period are associated with each other, and based on the content of the storage, the controller is configured to estimate the necessary execution time.

Moreover, according to a fourth aspect of the present invention, the driving source may be a motor that is able to perform a powering operation and a regenerative operation, and the controller may be configured to restrict a regenerative current generated with the regenerative operation to be not more than a predetermined upper limit as a restriction of the magnitude of the charge current.

According to the fourth aspect, the controller restricts the magnitude of the charge/discharge current (in particular, the charge current) from a view point different from electricity supply from power supply equipment to the vehicle. The deterioration of the secondary battery can be restrained without electricity supply from the outside being obstructed.

The vehicle may be able to receive electricity from an external electric power supply by way of fast charging and/or normal charging. During fast charging, the charging current the received electric power supply to charge the secondary battery is not less than a predetermined electric power and during normal charging the received electric power supply to charge the secondary battery is less than the predetermined electric power. Moreover, according to a fifth aspect of the present invention, the vehicle may be able to receive electricity from an external electric power supply at least through fast charging out of the fast charging and normal charging, and by restricting electricity supply through the fast charging, the controller may restrict the magnitude of the charge/discharge current.

According to the fifth aspect, by restricting the fast charging, the controller restricts the magnitude of the charge current (in particular, the charge current). Thereby, the deterioration of the secondary battery can be restrained while the normal charging being allowed.

Moreover, according to a sixth aspect of the present invention, the control apparatus may include a notification unit that is electrically connected to the controller and configured to notify an occupant of the vehicle of information, and the notification unit may determine, based on the detection signal of the state sensor, presence or absence of an indication that the first condition is to be fulfilled, and may notify, when it is determined that there is the indication, the occupant of information indicating that the first condition is going to be fulfilled.

According to the sixth aspect, before the magnitude of the charge/discharge current is actually restricted as a result of the first condition being fulfilled, the occupant is notified of the indication of this. Thereby, the frequency at which the magnitude of the charge/discharge current is restricted can be restrained, usability of the vehicle can be improved, and simultaneously, this is also advantageous to restraining the deterioration of the secondary battery by guiding the occupant not to allow fulfillment of the first condition.

Moreover, according to a seventh aspect of the present invention, the plurality of battery cells, each having a plate shape, may be disposed to line up in a vehicle front-rear direction in a state of being bound from both front and rear sides of the plate shape, each of the plurality of battery cells may be disposed such that a longitudinal direction is aligned along a vehicle width direction, a transverse direction is aligned along a vehicle height direction, and a thickness direction is aligned along the vehicle front-rear direction, a dimension of each of the plurality of battery cells in the longitudinal direction may exceed 50% relative to a vehicle width of the vehicle, and at both ends of each of the plurality of battery cells in the longitudinal direction, tabs corresponding to a positive electrode and a negative electrode of the battery cell may be disposed.

In general, gas stored in the battery cells is to be discharged outside the cells via the tabs with binding forces acting from both sides, the front and the rear, of each battery cell. However, in the case of the battery with a high aspect ratio as in the seventh aspect, the acting binding forces per unit area become weak by widened surface areas on the front and the rear. Meanwhile, since the tabs are normally provided at both ends of the battery cell, the magnitude s of the tabs are not necessarily widened relative to the surface areas of each battery cell.

Both that the binding forces per unit area become weak and that the sizes of the tabs do not become so large cause the gas stored in the battery cells to be hard to be discharged outside the cells.

According to an eighth aspect of the present invention the controller may be configured to determine that the first condition is fulfilled, when the SOC and the temperature are continuously not less than predetermined values. In other words, the controller monitors measurement values for the SOC and the temperature provided by the state sensor. If these measurement values are equal or larger than predetermined values, the controller determines that the first condition is fulfilled.

Moreover, according to a ninth aspect of the present invention, the controller may include an evaluation value determination unit. The evaluation value determination unit may be configured to calculate an evaluation value that increases in accordance with a time period during which a second condition is fulfilled. A second condition may be fulfilled when the measured SOC value is not less than a first threshold T1 and the measured temperature value is not less than a second threshold T2.

According to a tenth aspect of the present invention, said evaluation value determination unit my be further configured to determine that the first condition is fulfilled when the evaluation value exceeds a predetermined third threshold T3.

According to an eleventh aspect of the present invention, the controller may be configured to restrict the magnitude of a discharge current by decreasing the number of battery cells of the secondary battery connected to a converter for stepping down high voltage DC electric power provided by the secondary battery to the driving source. In addition or alternatively, the amount of step-down of the high voltage DC electric power supplied from the secondary battery may be increased in the converter, i.e. the converter is controlled to increase the amount of reduction of the output current of the secondary battery, when the first condition is fulfilled.

According to a twelfth aspect of the present invention, the controller may be configured to restrict the magnitude of a charge current by prohibiting fast charging through an external electricity supply and to allow only normal charging. Moreover, if the controller determines that the first condition is fulfilled, the controller informs the external charging equipment about a reduced charging current, i.e. the magnitude of the target charging current will be reduced, e.g. by sending a control message to the external charging equipment.

A further aspect of the invention is directed to a vehicle including a driving source for driving the vehicle and a secondary battery including a plurality of battery cells for providing electric power to the driving source, the vehicle further comprises a control apparatus according to any of the aspects described above.

Another aspect of the invention is directed to a method for supplying electric power from a secondary battery to a driving source of a vehicle. The secondary battery of the vehicle includes a plurality of battery cells. The method includes the steps of
Detecting by a state sensor at least one of an SOC and a temperature of the secondary battery;
in a state of disconnection of electric power supply to the driving source, determining, based on the detection signal of the state sensor, whether or not a first condition is fulfilled, the first condition being fulfilled when at least one of the SOC and the temperature is continuously not less than a predetermined value, and
restricting, when it is determined that the first condition is fulfilled, a magnitude of the charge/discharge current more than in a case where the first condition is not fulfilled.

According to a preferred aspect of the method, the steps described above may be performed by a control apparatus according to the invention.

The first aspect is particularly effective for such high aspect ratio battery cells.

### [Advantageous Effect of Invention]

As described above, according to the present invention, deterioration of a secondary battery can be restrained.

### [Brief Description of Drawings]

FIG. 1 is a schematic diagram exemplarily showing a vehicle.
FIG. 2 is a perspective view exemplarily showing a configuration of a secondary battery mounted on the vehicle.
FIG. 3A is a perspective view exemplarily showing a configuration of a battery cell.
FIG. 3B is a sectional view exemplarily showing a configuration of the battery cell.
FIG. 4 is a block diagram exemplarily showing a configuration of a control apparatus for a secondary battery.
FIG. 5 is a functional block diagram exemplarily showing a configuration of the control apparatus for a secondary battery.
FIG. 6 is a diagram for explaining fulfillment or non-fulfillment of a second condition.
FIG. 7 is a diagram for explaining a transition of an evaluation value.
FIG. 8 is a flowchart exemplarily showing processing related to a low rate control.
FIG. 9 is a flowchart exemplarily showing processing related to the low rate control.
FIG. 10 is a diagram for explaining relationship between high and low aspect ratios of the secondary battery and an amount of generation of gas.
FIG. 11 is a diagram for explaining relationship between an execution time of the low rate control and the amount of generation of gas.
FIG. 12 is a diagram for explaining relationship between the execution time of the low rate control and a transition of an internal resistance value.

### [Mode for Carrying Out the Invention]

Hereafter, embodiments of the present invention will be described based on the drawings. Notably, the following description is exemplary illustrations.

### <1. Overall Configuration>

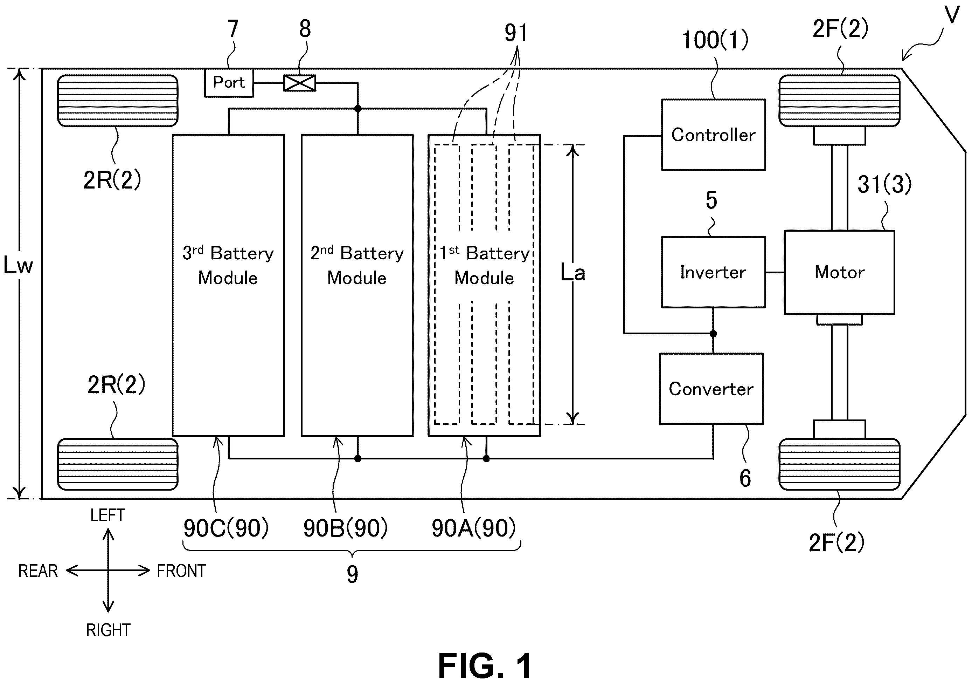

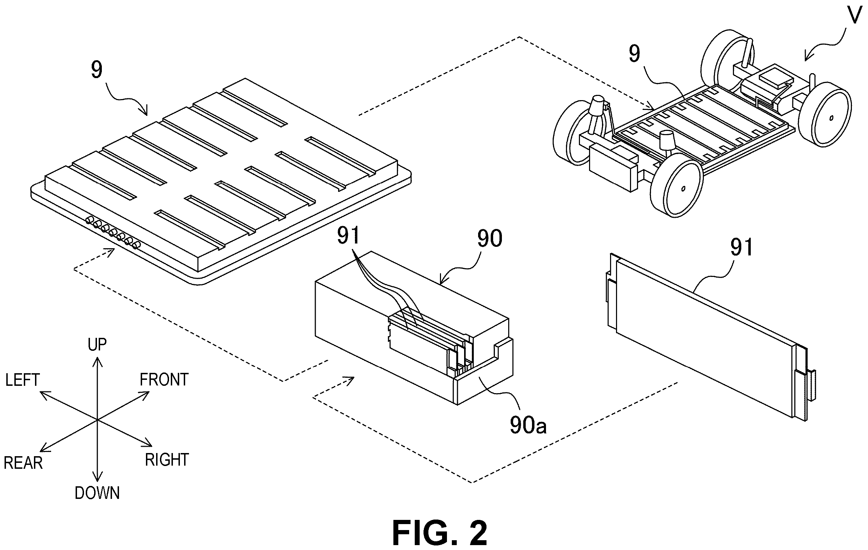

FIG. 1 is a schematic diagram exemplarily showing a vehicle V. FIG. 2 is an exploded view exemplarily showing a configuration of a secondary battery 9 mounted on the vehicle V. A control apparatus 1 for the secondary battery 9 according to the present embodiment is mounted on the vehicle V shown in the figures. The vehicle V is an automobile that can travels using electric power.

Specifically, the vehicle V according to the present embodiment is what is called an electric vehicle (EV). The vehicle V may be a hybrid vehicle utilizing electric power as a primary energy source, such as a plugin hybrid vehicle (PHEV).

Hereafter, a front-rear direction with a vehicle body of the vehicle V being as a reference is called "vehicle front-rear direction" or simply "front-rear direction". As exemplarily shown in FIG. 1 and FIG. 2, the "front" stated here means a direction where the vehicle V advances, and the "rear" means a direction where the vehicle V reverses.

Likewise, a right-left direction with the vehicle body of the vehicle V being as the reference is called "vehicle width direction" or simply "right-left direction". As exemplarily shown in FIG. 1 and FIG. 2, the "right" stated here means a right side as viewed from an occupant of the vehicle V, and the "left" means a left side as viewed from the occupant.

Likewise, an up-down direction with the vehicle body of the vehicle V being as the reference is called "vehicle height direction" or simply "up-down direction". As exemplarily shown in FIG. 2, being on the "up" side stated here means being in a direction as viewed from the occupant of the vehicle V, being in a direction that is perpendicular to a road surface on the vehicle V and in which a thing is separating from the road surface. Meanwhile, being on the "down" side stated here means being in a direction as viewed from the occupant of the vehicle V, being in a direction that is perpendicular to the road surface on the vehicle V and in which a thing is coming close to the road surface.

The secondary battery 9 in the present embodiment is configured as a battery system including a plurality of battery cells 91. Further, the control apparatus 1 for the secondary battery 9 in the same embodiment means an apparatus that supplies electric power from the plurality of battery cells 91 to a driving source 3 of the vehicle V. The control apparatus 1 can be rephrased as a control apparatus/control system that, by supplying electric power to the driving source 3 of the vehicle V, causes the driving source 3 to generate a travelling driving force of the vehicle V.

Specifically, the vehicle V according to the present embodiment includes a plurality of wheels 2, a motor 31 constituting the driving source 3, an inverter 5, a converter 6, a charging port 7, an in-vehicle charger 8, the secondary battery 9, and a controller 100. Each of these elements is mounted or disposed on the vehicle V.

The plurality of wheels 2 includes two front wheels 2F and two rear wheels 2R. Namely, the vehicle V according to the present embodiment is a four-wheeled automobile. The driving source 3 is coupled to all of or part of the plurality of wheels 2 via shaft(s) and the like.

The driving source 3 includes the motor 31 that can perform a powering operation and a regenerative operation. For example, the motor 31 is a permanent magnet-type synchronous motor that is driven with three-phase alternating current.

In the powering operation, the motor 31 receives electric power supply from the secondary battery 9 to rotate. This rotation generates the travelling driving force of the vehicle V. When the motor 31 rotates in the powering operation, the rotation is transmitted via a not-shown shaft. The rotation transmitted via the shaft rotates at least part of the wheels 2, such as the two front wheels 2F. By the at least part of the wheels 2 rotating, the vehicle V travels.

Moreover, the motor 31 not only functions as a driving source in the powering operation but also can be caused to function as a generator in the regenerative operation. The motor 31 is electrically connected to the secondary battery 9 via the inverter 5 and the converter 6. This connection is used for both the powering operation and the regenerative operation as mentioned later in detail.

In the powering operation, the converter 6 steps down high voltage DC electric power supplied from the secondary battery 9 into DC electric power having a predetermined base voltage. The converter 6 inputs the DC electric power after the step-down into the inverter 5. The inverter 5 converts the DC electric power supplied from the secondary battery 9 via the converter 6 into three-phase alternating current having phases different from one another. The inverter 5 supplies the alternating current after the conversion to the motor 31. By supplying the alternating current to the motor 31, the motor 31 rotates as mentioned above.

In the regenerative operation, the inverter 5 converts AC electric power generated by rotation of the motor 31 into DC electric power. The inverter 5 inputs the DC electric power after the conversion into the converter 6. The converter 6 boosts the DC electric power input from the motor 31 via the inverter 5. The converter 6 charges the secondary battery 9 with the DC electric power after the boosting.

The secondary battery 9 includes one or a plurality of (in the present embodiment, a plurality of) battery modules 90. As shown in FIG. 1 and FIG. 2, each battery module 90 includes the plurality of battery cells 91 mentioned above.

For example, the secondary battery 9 according to the present embodiment includes a first module 90A, a second module 90B, and a third module 90C as battery modules 90 constituting the plurality of battery modules 90.

Herein, the plurality of battery modules 90 according to the present embodiment line up in the front-rear direction as shown in FIG. 1. Each of the battery modules 90 lining up in the front-rear direction is set to have, for example, three times or more the dimension in the vehicle width direction (longitudinal direction) as compared with the dimension in the vehicle height direction (transverse direction). The dimension of each battery module 90 in the vehicle width direction is set to a length of 70% or more a vehicle width Lw of the vehicle V.

Moreover, for example, the plurality of battery modules 90 are connected to one motor 31 in parallel. The plurality of battery modules 90 may be individually connected to the motor 31 via respective converters 6.

Each battery module 90 is connected to the charging port 7 via the in-vehicle charger 8. The charging port 7 can also be rephrased as a charging inlet.

The vehicle V is configured to be able to receive electricity at least through fast charging out of fast charging and normal charging. In particular, the vehicle V according to the present embodiment is configured to be able to receive electricity through both fast charging and normal charging.

Herein, the fast charging means charging standards for receiving electric power supply not less than predetermined electric power from power supply equipment to charge the secondary battery 9. The fast charging includes CHAdeMO (registered trademark), CCS1, CCS2, GB/T, and Supercharger (TPC). The "predetermined electric power" stated here may be 10 kW, for example. Moreover, charging that has a C-rate not less than 1.0 may be categorized into the "fast charging" in the present embodiment.

Meanwhile, the normal charging means charging standards for receiving electric power supply less than the predetermined electric power from the power supply equipment to charge the secondary battery 9. The normal charging includes J1772 (Type1), J1772 (Type2), and Mennekes (registered trademark). Moreover, charging that has a C-rate less than 1.0 may be categorized into the "normal charging" in the present embodiment.

Details being omitted, one or two charging ports 7 are prepared for each vehicle V. To each charging port 7, a connector of power supply equipment can be connected. This connection can supply electricity from the power supply equipment to the vehicle V via the charging port 7.

For example, when electric power supplied to the vehicle V is alternating current, after converted into direct current by the in-vehicle charger 8, the electric power is supplied to the battery modules 90 of the secondary battery 9.

Moreover, when electric power supplied to the vehicle V is direct current, at least without conversion between alternating current and direct current, the electric power is supplied to the battery modules 90 of the secondary battery 9.

Notably, the in-vehicle charger 8 according to the present embodiment is configured to restrict electricity supply through the fast charging, based on a control signal from the controller 100 mentioned later. The in-vehicle charger 8 performs the restriction of electricity supply by prohibiting or disconnecting electricity supply through the fast charging and/or by lowering a magnitude of a current (charge current) flowing in electricity supply.

### <3. Details of Secondary Battery>

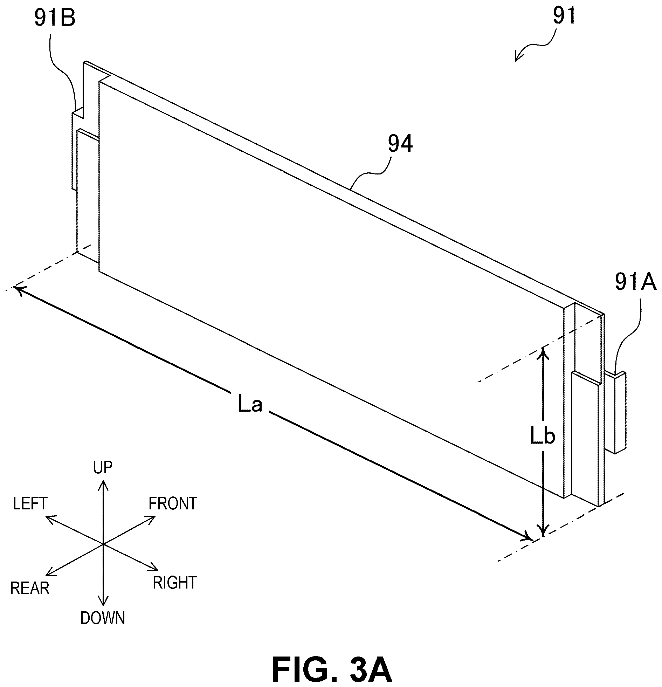

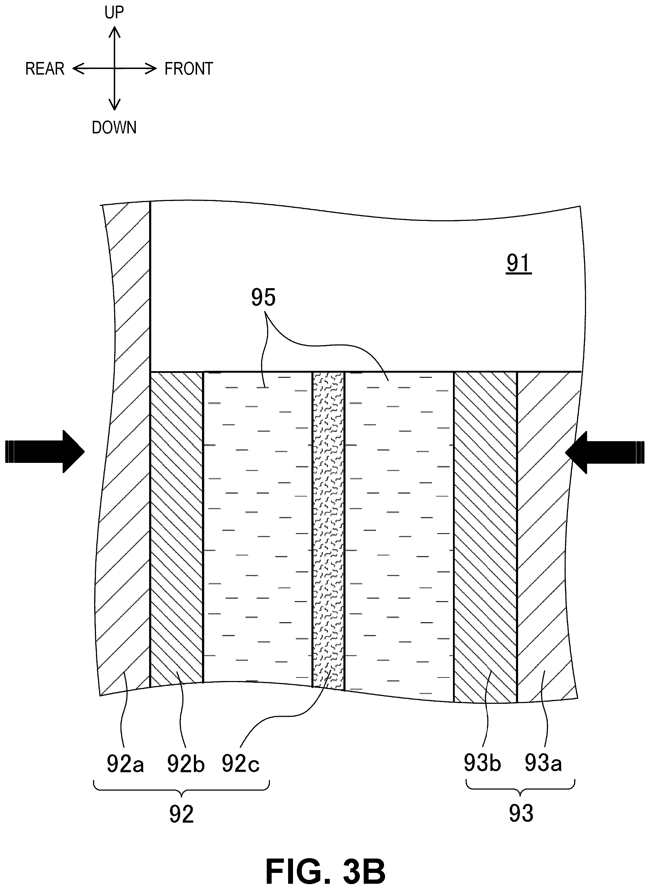

FIG. 3A is a perspective view exemplarily showing a configuration of the battery cell 91. FIG. 3B is a sectional view exemplarily showing the configuration of the battery cell 91. The section in FIG. 3B corresponds to a section taken along the front-rear direction and the up-down direction.

As shown in FIG. 2, each of the plurality of battery cells 91 constituting each battery module 90 has a plate shape. These battery cells 91 are housed in a box-like module container 90a in the state of lining up in the front-rear direction.

In detail, in each battery module 90, the plurality of battery cells 91 are disposed such that their longitudinal directions go along the vehicle width direction, their transverse directions go along the vehicle height direction, and their thickness directions go along the vehicle front-rear direction. Such disposition can make the dimension of each battery module 90 in the vehicle width direction (longitudinal direction) long while making the dimension thereof in the vehicle height direction as short as possible.

Moreover, with the module container 90a or a separate member independent of the module container 90a, on the plurality of battery cells 91 housed in each module container 90a, an external force that binds these in the front-rear direction acts (refer to black arrows in FIG. 3B).

Further, as shown in FIG. 3A, a dimension La of each of the plurality of battery cells 91 in the longitudinal direction is longer than a dimension Lb thereof in the transverse direction. In the case of the present embodiment, the dimension La in the longitudinal direction is three times or more of the dimension Lb in the transverse direction. Each battery cell 91 is a high aspect ratio battery cell. Each battery cell 91 can be referred to as what is called a blade battery or a blade cell.

In detail, as shown in FIG. 1, the dimension La of each of the plurality of battery cells 91 in the longitudinal direction exceeds 50% relative to the vehicle width Lw of the vehicle V. In other words, the plurality of battery cells 91 extend to be long in the vehicle width direction such that they cannot be adjacent to each other in the vehicle width direction. The dimension La of each of the plurality of battery cells 91 in the longitudinal direction preferably exceeds 70% relative to the vehicle width Lw.

Moreover, tabs 91A and 91B corresponding to a positive electrode and a negative electrode of each of the plurality of battery cells 91 are disposed at both ends of the battery cell in the longitudinal direction.

More in detail, each battery cell 91 includes alternately stacked negative electrode sheets 92 and positive electrode sheets 93. The alternately stacked negative electrode sheets 92 and the positive electrode sheets 93 are housed in a cell container 94 shown in FIG. 3A. Each battery cell 91 is what is called a lithium ion battery using movement of lithium ions between electrodes.

As shown in FIG. 3B, the negative electrode sheet 92 has a current collector 92a, an active material 92b, and a separator 92c. The current collector 92a and the active material 92b constitute what is called a "negative electrode". The negative electrode sheet 92 extends in the vehicle width direction to be long.

The current collector 92a is a plate material with a small thickness extending in a direction perpendicular to the stacking direction. One of both ends of the current collector 92a protrudes outside the cell container 94, for example, through an opening positioned on one side of the cell container 94 in the longitudinal direction. This protrusion portion constitutes the tab 91A on the negative electrode side.

The active material 92b is applied onto a surface of the current collector 92a. The negative electrode including the active material 92b and the current collector 92a faces the positive electrode sheet 93, for example, via the separator 92c.

As shown in FIG. 3B, the positive electrode sheet 93 has a current collector 93a and an active material 93b. The current collector 93a and the active material 93b constitute what is called a "positive electrode". The positive electrode sheet 93 extends in the vehicle width direction to be long.

The current collector 93a is a plate material with a small thickness extending in a direction perpendicular to the stacking direction. One of both ends of the current collector 93a protrudes outside the cell container 94, for example, through an opening positioned on the other side of the cell container 94 in the longitudinal direction. This protrusion portion constitutes the tab 91B on the positive electrode side.

The active material 93b is applied onto a surface of the current collector 93a. The positive electrode including the active material 93b and the current collector 93a faces the active material 92b and the current collector 92a of the negative electrode sheet 92, for example, via the separator 92c.

Moreover, an electrolytic liquid 95 is encapsulated in the cell container 94. Lithium ions come and go between the electrodes via the electrolytic liquid 95. By causing current to flow into the battery cell 91 from the outside, lithium ions move to the negative electrode side. The movement of lithium ions generates a potential difference between the negative electrode and the positive electrode. The potential difference being generated by electric power supply from the outside is equivalent to the battery cell 91 being charged.

Moreover, by lithium ions moving from the negative electrode side to the positive electrode side, the potential difference mentioned above is relieved. At that time, current is to flow from the battery cell 91 to the outside. The potential difference being relieved by electric power supply to the outside is equivalent to the battery cell 91 discharging.

### <2. Configuration of Control Apparatus>

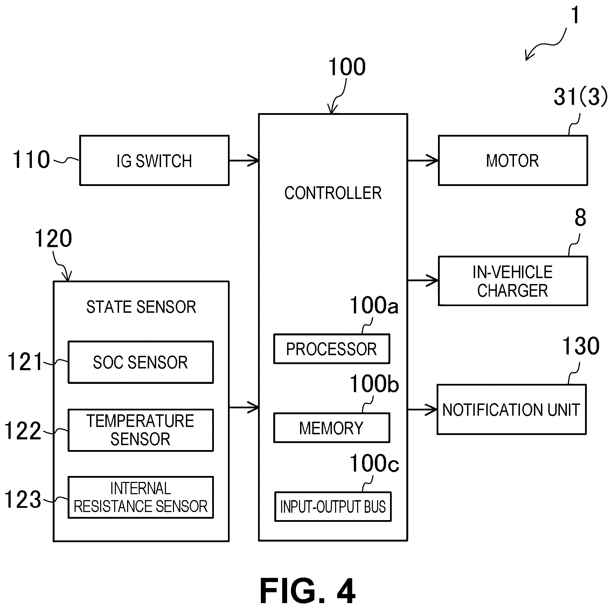

FIG. 4 is a block diagram exemplarily showing a configuration of the control apparatus 1 for the secondary battery 9. The control apparatus 1 includes switches such as an IG switch 111, state sensors 120 such as an SOC sensor 121, a notification unit 130, and the controller 100.

The IG switch 111 is a switch for supplying electricity to the driving source 3 of the vehicle V. The IG switch 111 is electrically connected to the controller 100. When the IG switch 111 is manipulated, an electric signal for switching an operation mode of the vehicle V between "IG-ON" and "IG-OFF" is input into the controller 100. The IG switch 111 can also be called a power switch or an ignition switch.

The "IG-OFF" is a mode used in non-travelling of the vehicle V such as in parking and in leaving (particularly in power source disconnection of the driving source 3). In this mode, charge and discharge of the secondary battery 9 are restricted. In other words, in this mode, the secondary battery 9 and the driving source 3 is electrically separated (the electric connection therebetween is disconnected). As a result, both electric power supply from the secondary battery 9 to the driving source 3 and electric power supply from the driving source 3 to the secondary battery 9 are to be disconnected.

The "IG-ON" is a mode mainly used in travelling of the vehicle V (particularly while power being turned on for the driving source 3). In this mode, charge and discharge of the secondary battery 9 are allowed. In other words, in this mode, electricity is turned on for the secondary battery 9 and the driving source 3 (they are electrically connected). As a result, both electric power supply from the secondary battery 9 to the driving source 3 and electric power supply from the driving source 3 to the secondary battery 9 are to be allowed.

The state sensors 120 are configured to detect at least one of an SOC (State Of Charge) and a temperature of the secondary battery 9. The state sensors 120 are electrically connected to the controller 100. Detection signals of the state sensors 120 are input into the controller 100. In particular, in the present embodiment, they are configured to detect individually both the SOC and the temperature of the secondary battery 9.

In detail, the state sensors 120 according to the present embodiment at least include the SOC sensor 121 and a temperature sensor 122. The SOC sensor 121 and the temperature sensor 122 are electrically connected to the controller 100.

More in detail, the SOC sensor 121 detects the SOC of the secondary battery 9. The temperature sensor 122 detects the temperature of the secondary battery 9. The temperature sensor 122 may detect a physical quantity having a correlation with the temperature of the secondary battery 9, such as a peripheral temperature of the secondary battery 9 or an outside air temperature of the vehicle V. The SOC sensor 121 and the temperature sensor 122 input the detection signals of both sensors into the controller 100.

Specifically, the SOC sensor 121 outputs a signal corresponding to the SOC, based on a measurement value of an open circuit voltage (Open Circuit Voltage: OCV). The SOC sensor 121 can include a voltage sensor that can measure a circuit voltage. The SOC sensor 121 is electrically connected to the controller 100. The SOC sensor 121 inputs its detection signal into the controller 100.

The state sensors 120 further include a resistance sensor 123 that measures an internal resistance of the secondary battery 9. The resistance sensor 123 is electrically connected to the controller 100. A detection signal of the resistance sensor 123 is input into the controller 100.

The notification unit 130 is electrically connected to the controller 100. The notification unit 130 is configured to notify the occupant of the vehicle V of information related to processing by the controller 100 mentioned later.

In detail, the notification unit 130 according to the present embodiment includes what is called a DCM (Data Communication Module). The notification unit 130 can notify the occupant of information via a portable terminal of the occupant, such as a smartphone or a tablet. The information that the occupant is notified of may be color vision information using display on a screen or may be voice information using output from a loudspeaker.

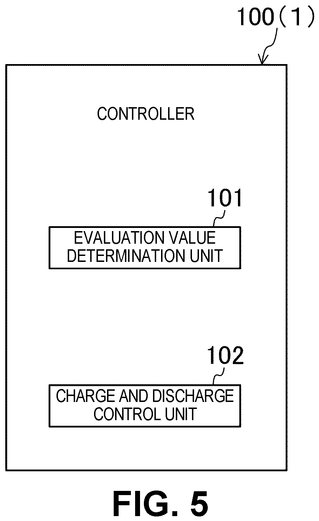

The controller 100 includes hardware such as a processor 100a, a memory 100b, and an input-output bus 100c and software such as a database and a control program. For functional elements related to the latter software, refer to FIG. 5.

Notably, while one controller 100 is shown for the control apparatus 1 in FIG. 4, this controller 100 may be composed, for example, of a module (PCM) for controlling the driving source 3 out of various control modules mounted on the vehicle V.

Based on signals input from the switches and the sensors mentioned above, the controller 100 performs processing related to charge and discharge of the secondary battery 9. In order to perform such processing, the controller 100 includes a plurality of functional blocks shown in FIG. 5.

### <4. Details of Controller>

As shown in FIG. 5, the controller 100 includes an evaluation value determination unit 101 and a charge and discharge control unit 102. The evaluation value determination unit 101 determines whether or not a first condition is fulfilled. Based on the determination result by the evaluation value determination unit 101, the charge and discharge control unit 102 controls a charge/discharge current of the secondary battery 9. Herein, the term, charge/discharge current, designates at least one of a charge current and a discharge current. In the case of the present embodiment, the controller 100 is configured to control at least the charge current as the charge/discharge current.

Herein, the first condition is a condition that is fulfilled when at least one of the SOC and the temperature is continuously not less than a predetermined value. In particular, the first condition according to the present embodiment is set to be fulfilled when both the SOC and the temperature are continuously not less than predetermined values.

When the SOC and the temperature of the secondary battery 9 are high, as compared with the case where they are low, gas more tends to be generated in the battery cells 91. Moreover, when the SOC and the temperature of the secondary battery 9 being high are continuing, it is considered that, in accordance with the continuing time, the gas accumulates in the battery cells 91.

Accordingly, by determining the first condition, there can be determined the presence or absence of generation of gas in the battery cells 91 and an amount of generation of the gas.

First, in IG-OFF, for example, in the vehicle V being left, the evaluation value determination unit 101 determines whether or not the first condition is fulfilled. In the present embodiment, determination of fulfillment or non-fulfillment of the first condition is made with an evaluation value mentioned later in detail.

In detail, the evaluation value determination unit 101 monitors transitions (in particular, transitions with the elapse of time) of the SOC and the temperature. Based on the values of the SOC and the temperature, the evaluation value determination unit 101 determines whether or not a second condition is fulfilled.

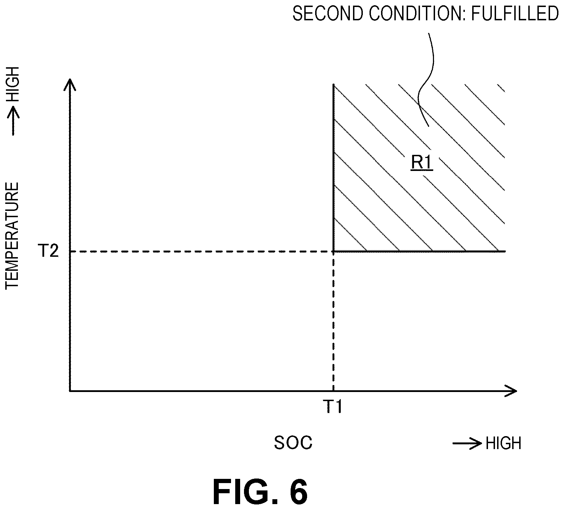

Herein, as exemplarily shown as a region R1 in FIG. 6, the second condition is a condition that is fulfilled when the SOC is not less than a first threshold T1 and the temperature is not less than a second threshold T2.

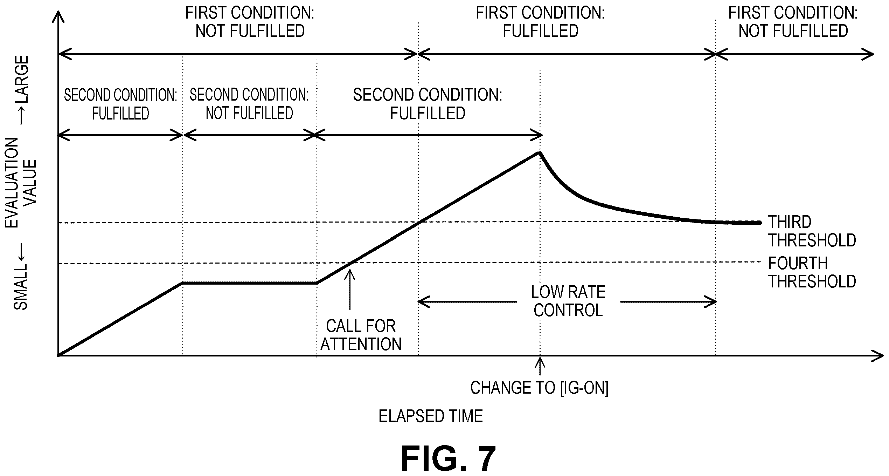

When the second condition is fulfilled, the evaluation value determination unit 101 calculates an evaluation value that increases in accordance with a period during which the second condition is fulfilled (fulfillment period). This evaluation value is larger as the fulfillment period of the second condition is longer. For example, as shown in FIG. 7, the evaluation value may be an integrated value that starts to be counted from the time point when the second condition is fulfilled and is being chronologically counted up during the period during which the second condition is fulfilled. As shown in the figure, when the second condition is not fulfilled, the evaluation value is not counted up. When the motor 31 is driven at IN-ON, the counting of the evaluation value may be stopped since the vehicle V is no longer being left.

That the evaluation value is large means that the second condition is continuously fulfilled over a relatively long period. That the evaluation value is small means that the second condition is fulfilled only for a relatively short period. It is considered that the evaluation value has a positive correlation with an amount of gas accumulated in the battery cells 91.

When the evaluation value exceeds a predetermined third threshold T3, the evaluation value determination unit 101 determines that both the SOC and the temperature are continuously not less than the predetermined values. Namely, when the evaluation value exceeds the predetermined third threshold T3, the evaluation value determination unit 101 determines that the first condition is fulfilled.

Then, when the evaluation value determination unit 101 determines that the first condition is fulfilled, the charge and discharge control unit 102 performs a predetermined low rate control (refer to FIG. 7). Herein, the low rate control refers to processing of restricting the magnitude of the charge/discharge current more than in the case where the first condition is not fulfilled.

Notably, as mentioned above, the charge and discharge control unit 102 according to the present embodiment is configured to restrict at least the magnitude of the charge current as the charge/discharge current. Nevertheless, the present invention is not limited to such a configuration. The charge and discharge control unit 102 may restrict at least a magnitude of the discharge current in place of the charge current. When the magnitude of the discharge current is restricted, by switching a circuit structure of electric circuits (circuits which the discharge current flows through) connecting the battery modules 90 and the converter 6, the charge and discharge control unit 102 may decrease the number of the battery modules 90, that is, the battery cells 91 connected to the converter 6. Otherwise, by increasing the amount of step-down at the converter 6, the charge and discharge control unit 102 may restrict the magnitude of the discharge current.

Returning to the description of the present embodiment, when the low rate control is performed, the charge and discharge control unit 102 according to the embodiment decreases the magnitude of the charge/discharge current more than in the case where the first condition is not fulfilled. By decreasing the magnitude of the charge/discharge current, at least the charge out of the charge and discharge is to be performed at a relatively low C-rate.

More in detail, the charge and discharge control unit 102 restricts the C-rate when the low rate control is performed. When the C-rate is restricted, the discharge current, in addition to the charge current, is to be also restricted. In this case, by performing the low rate control, the C-rate may be decreased, for example, to be not more than 0.1C.

Specifically, when the low rate control is performed, by restricting electricity supply through the fast charging, the charge and discharge control unit 102 according to the present embodiment restricts the magnitude (C-rate) of the charge/discharge current (in particular, the charge current). In this case, the electricity supply through the fast charging is to be prohibited, and only the electricity supply through the normal charging is to be allowed.

Moreover, in place of or in addition to restricting the electricity supply through the fast charging, by restricting a regenerative current generated with the regenerative operation of the motor 31 to be not more than a predetermined upper limit, the charge and discharge control unit 102 according to the present embodiment restricts the magnitude of the charge/discharge current (in particular, the charge current). In this case, by prohibiting the regenerative operation itself, the regenerative current may be restricted to be zero.

With IG-ON characters such as during the travelling of the vehicle V, the evaluation value determination unit 101 moreover updates the determination of the first condition. By updating the determination of the first condition, the controller 100 cancels the low rate control by the charge and discharge control unit 102.

Herein, the first condition is set so as not to be fulfilled when an internal resistance value of the secondary battery 9 continuously decreases. It is considered that, when gas is generated in the battery cells 91, the internal resistance value rises along with decrease of the reaction areas. The internal resistance value of the secondary battery 9 has a positive correlation with the amount of gas accumulated in the battery cells 91. Accordingly, by monitoring a transition of the internal resistance value, a change of the amount of gas in the battery cells 91 can be estimated.

Moreover, as with the internal resistance value, the evaluation value used for determining the first condition also has the positive correlation with the amount of gas as mentioned above. Accordingly, the evaluation value and the internal resistance value can be associated with each other.

For example, the controller 100 has a map in which a change amount of the internal resistance value and the evaluation value are associated with each other. As shown in FIG. 7, based on the transition of the internal resistance value after IG-ON, the controller 100 can updates the evaluation value.

Therefore, when the low rate control is started, after the start of the driving source 3 (after IG-ON), the controller 100 according to the present embodiment estimates the internal resistance value of the secondary battery 9. Based on the estimated internal resistance value, the controller 100 updates the evaluation value.

After that, based on the evaluation value after the update, the controller 100 updates the determination of the first condition. When the first condition is then still fulfilled, the controller 100 continues the low rate control. On the other hand, when the first condition is not fulfilled after the update, the controller 100 cancels the low rate control (cancels restricting the magnitude of the charge/discharge current).

### <5. Specific Example of Processing by Controller>

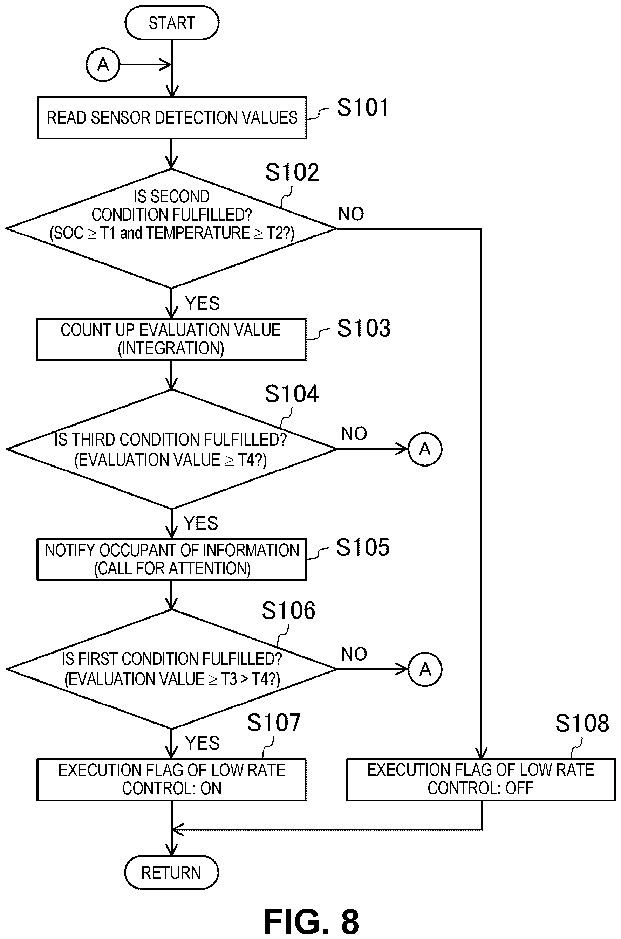

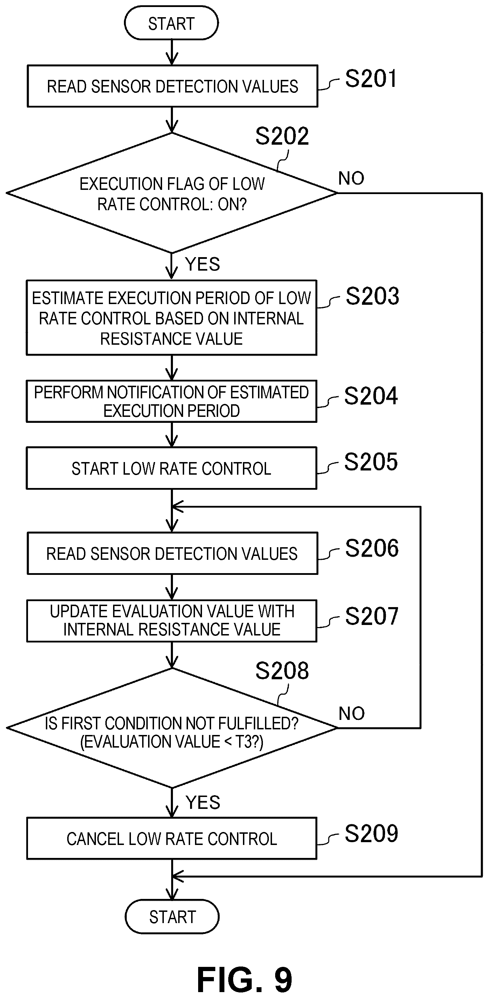

Each of FIG. 8 and FIG. 9 is a flowchart showing a specific example of processing related to the low rate control. The flow in FIG. 8 is mainly processing repeatedly performed before "IG-ON" of the vehicle V. The flow in FIG. 9 is processing repeatedly performed after "IG-ON" of the vehicle V.

### (5-1. Processing in IG-OFF)

First, in step S101, the controller 100 reads the detection signals of the state sensors 120. The state sensors 120 used here include the SOC sensor 121 and the temperature sensor 122.

Subsequently in step S102, based on the detection signals of the state sensors 120, the controller 100 determines whether or not the second condition is fulfilled. Specifically, the controller 100 determines whether or not the SOC of the secondary battery 9 is not less than the first threshold (T1) and the temperature of the secondary battery 9 is not less than the second threshold (T2) (SOC≥T1 and Temperature≥T2?). The first threshold and the second threshold are preset and stored in the memory 100b of the controller 100 or the like.

When the determination in step S102 is YES, the controller 100 puts the control process forward to step S3. When the determination in step S102 is NO, the controller 100 puts the control process forward to step S108.

In the latter step S108, the controller 100 changes an execution flag of the low rate processing from ON to OFF or keeps it to be OFF. When the execution flag is OFF, the controller 100 does not performs the low rate processing. After that, the controller 100 iteratively performs the flow in FIG. 8 sequentially from step S101.

On the other hand, in the former step S103, the controller 100 counts up the evaluation value.

In other words, as long as the second condition continues to be fulfilled in step S102, the controller 100 counts up the evaluation value in step S103 such that it increases in proportion to the fulfillment period.

On the other hand, when the second condition is not fulfilled during the count-up of the evaluation value, the controller 100 suspends the count-up of the evaluation value, and in step S108, sets the execution flag of the low rate processing to OFF.

In step S104 subsequent to step S103, based on the counted-up evaluation value, the controller 100 determines whether or not a third condition is fulfilled. Specifically, the controller 100 determines whether or not the evaluation value is not less than a fourth threshold (T4) (Evaluation Value≥T4?). The fourth threshold is a predetermined value at least less than the third threshold. The fourth threshold is preset and stored in the memory 100b of the controller 100 or the like. Determining fulfillment or non-fulfillment of the third condition is equivalent to determining the presence or absence of an indication that the first condition is to be fulfilled.

When the determination in step S104 is YES (when there is the indication), the controller 100 puts the control process forward to step S105. When the determination in step S104 is NO, the controller 100 returns the control process to step S101.

Subsequently in step S105, the controller 100 notifies the occupant of information via the notification unit 130. The notification unit 130 notifies the occupant of information indicating that the first condition is going to be fulfilled. This information may be information implying that the first condition is going to be fulfilled without explicitly saying that the first condition is going to be fulfilled, such, for example, as that "the secondary battery is left for a long period at a high temperature and at a high SOC state" or that "the execution flag of the low rate processing is going to be ON soon".

Notably, the process in step S105 may be performed only at the first fulfillment of the third condition or may be skipped when the execution flag of the low rate processing is ON.

Subsequently in step S106, based on the counted-up evaluation value, the controller 100 determines whether or not the first condition is fulfilled. Specifically, the controller 100 determines whether or not the evaluation value is not less than the third threshold (Evaluation Value≥T3?). The third threshold is preset and stored in the memory 100b of the controller 100 or the like.

When the determination in step S106 is YES, the controller 100 puts the control process forward to step S107. When the determination in step S106 is NO, the controller 100 returns the control process to step S101.

In step S107, the controller 100 changes the execution flag of the low rate processing from OFF to ON or keeps it to be ON. When the execution flag is ON, the controller 100 is to perform the low rate processing after IG-ON.

After step S107, the controller 100 iteratively performs the flow in FIG. 8 until the IG switch 111 is manipulated and becomes IG-ON. For example, when the determination in step S102 is still established after the execution flag becomes ON, the controller 100 is to continue to count up the evaluation value.

### (5-2. Processing after IG-ON)

After that, in the case of being "IG-ON", first, in step S201, the controller 100 reads the detection signals of the state sensors 120. The state sensors 120 used here include the resistance sensor 123.

Subsequently in step S202, the controller 100 determines whether or not the execution flag of the low rate control is ON, and only when the determination is YES, performs the processes in and after step S203.

Specifically, in step S203, based on the internal resistance value, the controller 100 estimates an execution period of the low rate control. In the case of a general secondary battery, the negative electrodes of the battery cells 91 contract in discharging and expand in charging. Moreover, in consideration of the regenerative operation of the motor 31, the charge current that is through the regenerative operation is to flow in the secondary battery 9. Namely, even during the travelling of the vehicle V, the battery cells 91 are to repeat expansion and contraction.

As a result, gas stored in the battery cells 91 (in particular, gas caused by decomposition of the electrolytic liquid 95) is being released from the tabs 91A and 91B. Thereby, obstruction of the chemical reactions due to the gas is relieved, and the internal resistance value of the battery cells 91 is to decreases gradually.

Based on the current internal resistance value, the controller 100 estimates the execution time required for it decreasing down to an allowable value (predetermined value at which the low rate control becomes not needed). The controller 100 prestores a map or a model in which the detection value of each of the state sensors 120 such as the resistance sensor 123 and the execution period are associated with each other, and based on the content of the storage, estimates the execution time.

Subsequently in step S204, the controller 100 notifies the occupant of the estimated execution period. For example, this notification may be displayed on a display screen near a driver's seat (display unit for a tachometer and the like).

Subsequently in step S205, the controller 100 starts the low rate control. Thereby, magnitudes of various charge currents are restricted, such as the charge current in charging from power supply equipment and the charge current through the regenerative operation. The battery cells 91 can be caused to expand and contract without deposition of Li and the like due to high rate charging being caused.

Subsequently in step S206, the controller 100 reads the detection signals of the state sensors 120 again. After driving of the motor 31 performed after IG-ON, the controller 100 acquires the internal resistance value.

Herein, when the battery cells 91 repeat the expansion and the contraction, gas in the cells are discharged. The influence is to be reflected on the internal resistance value as mentioned above.

Therefore, subsequently in step S207, the controller 100 updates the evaluation value used for determining the first condition with the acquired internal resistance value. The controller 100 prestores a map in which an amount of decrease of the internal resistance value after the start of the low rate control and the evaluation value corresponding to the amount of decrease are associated with each other. This map is set such that the evaluation value also decreases as the internal resistance value decreases. The controller 100 updates the evaluation value, based on the amount of decrease of the internal resistance value.

Subsequently in step S208, based on the evaluation value after the update, the controller 100 updates the determination of the first condition. Then, when the first condition is not fulfilled after the update, the controller 100 puts the control process forward to step S209, and cancels the low rate control. Moreover, when the first condition is still fulfilled after the update, the controller 100 returns the control process to step S206.

In determination of whether or not the first condition is not fulfilled, a fifth threshold that is set to be lower than the third threshold may be used in place of the third threshold.

### <6. Gas Generated in Cells>

When the secondary battery 9 for the vehicle V is left outdoor or the like, there is a possibility that, near the negative electrodes of the battery cells 91 constituting the secondary battery 9, gas caused by decomposition of the electrolytic liquid 95 is stored.

It is considered that such generation of the gas becomes more significant in situations such as at a higher temperature and at a higher SOC.

When the gas is stored in the battery cells 91, the gas occasionally prevents the chemical reactions in the battery cells 91. This causes a possibility that the reaction areas in the battery cells 91 decrease and the internal resistances therein rise. This is disadvantageous from various viewpoints such as the battery capacity.

In general, gas stored in the battery cells 91 is to be discharged outside the cells 91 via the tabs 91A and 91B with binding forces acting from both sides, the front and the rear, of each battery cell 91 as indicated by the arrows in FIG. 3B.

However, in the case of the battery cell 91 with a high aspect ratio as in the present embodiment, the acting binding forces per unit area become weak by widened surface areas on the front and the rear. Meanwhile, since the tabs 91A and 91B are provided at both ends of the battery cell 91 as normal, the sizes of the tabs 91A and 91B are not necessarily widened relative to the surface areas of each battery cell 91.

Both that the binding forces per unit area become weak and that the sizes of the tabs 91A and 91B do not become so large cause the gas stored in the battery cells to be hard to be discharged outside the cells.

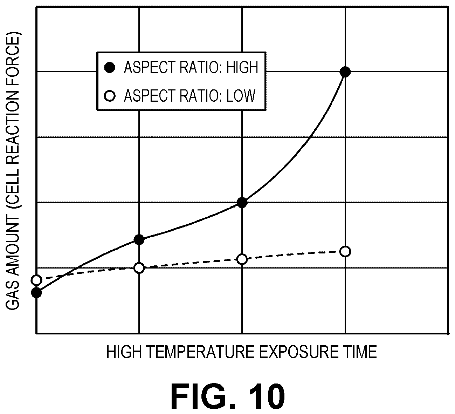

For example, the horizontal axis in FIG. 10 denotes an elapsed time in the case where the secondary battery 9 is exposed to a high temperature such that the first condition is fulfilled. The vertical axis in the figure denotes a cell reaction force of the secondary battery 9 by means of a load cell (reaction force against binding in the front-rear direction). It is considered that the cell reaction force is proportional to the amount of gas in the battery cells 91. As shown in FIG. 10, the battery cells 91 that have a high aspect ratio exhibit a higher cell reaction force than the battery cells 91 that have a low aspect ratio.

In this situation, the inventors have tried to discharge, by causing the battery cells 91 to expand and contract through charge and discharge, gas stored in the battery cells to the outside through the electrodes of the battery cells 91. However, this is disadvantageous since, depending on a setting of what is called the C-rate, electrodeposition of Li and the like occurs. In other words, a system that discharges gas from the inside of the battery cells 91 without deposition being caused, if any, is advantageous.

Therefore, the inventors have employed a configuration to restrict high rate charging by the low rate control when the first condition which implies generation of gas is satisfied as described with reference to FIG. 8. Thereby, the gas can be discharged from the inside of the battery cells 91 without deposition being caused. As a result, deterioration of the secondary battery 9 can be restrained.

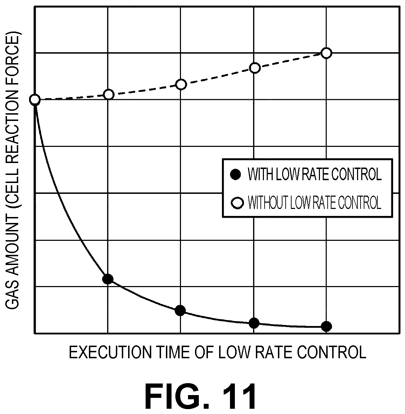

For example, the horizontal axis in FIG. 11 denotes an elapsed time from the start of the low rate control. The vertical axis means the same as in FIG. 10. As shown in FIG. 11, by the low rate control being performed, the cell reaction force, accordingly, the amount of gas in the battery cells 91 can be reduced.

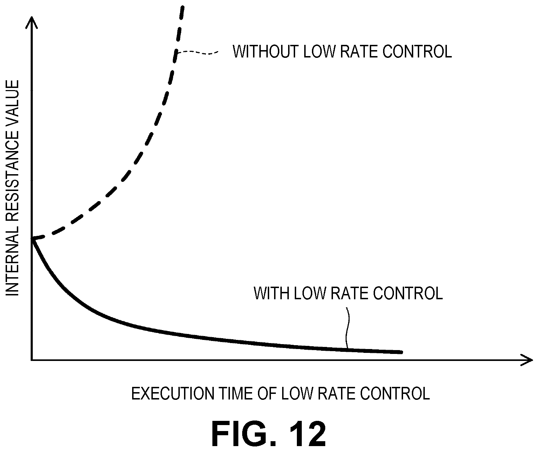

Moreover, it is considered that, when gas is stored in the battery cells 91, the gas prevents the chemical reactions, and consequently, the internal resistance value of the secondary battery 9 increases. In other words, it is considered that, when the gas is discharged from the battery cells 91 through the low rate control, the internal resistance value gradually decreases, for example, as shown in FIG. 12. It is considered that, when the internal resistance value continuously decreases, the magnitude of the charge current no longer needs to be restricted.

Therefore, as described using FIG. 9, after the start of the driving source 3 with electric power, the controller 100 monitors a transition of the internal resistance value, and redetermines the first condition based on the internal resistance value changing with the elapse of time. Thereby, the execution period of the low rate control can be made as short as possible. Thereby, both of restraining the deterioration of the secondary battery 9 and restraining the charge period of the secondary battery 9 can be made compatible.

Moreover, by performing the low rate control by restricting the magnitude of the charge current generated in the regenerative operation and/or restricting the fast charging, the deterioration of the secondary battery 9 can be restrained while the normal charging being allowed.

Moreover, as described in relation to step S105 in FIG. 8, before the magnitude of the charge current is actually restricted as a result of the first condition being fulfilled, the occupant is notified of the indication of this. Thereby, the frequency at which the magnitude of the charge current is restricted can be restrained, usability of the vehicle can be improved, and simultaneously, this is also advantageous to restraining the deterioration of the secondary battery by guiding the occupant not to allow fulfillment of the first condition.

### [Reference Signs List]

- 1: control apparatus
- 3: driving source
- 31: motor
- 9: secondary battery
- 91: battery cell
- 100: controller
- 120: state sensor
- 121: SOC sensor
- 122: temperature sensor
- V: vehicle

## Claims

1. A control apparatus (1) for a secondary battery (9), the secondary battery (9) including a plurality of battery cells (91), the control apparatus supplying electric power from the plurality of battery cells (91) to a driving source (3) of a vehicle (v), the control apparatus (1) **characterized by** comprising:
a state sensor (120) for detecting at least one of an SOC and a temperature of the secondary battery (9); and
a controller (100) configured to determine, based on a detection signal of the state sensor (120), whether or not a first condition is fulfilled, the first condition being fulfilled when at least one of the SOC and the temperature is continuously not less than a predetermined value, and to control a charge/discharge current of the secondary battery (9) based on a result of the determination, wherein
the controller is further configured to
determine, in disconnection of electric power supply to the driving source (3), whether or not the first condition is fulfilled, and
to restrict, when it is determined that the first condition is fulfilled, a magnitude of the charge/discharge current more than in a case where the first condition is not fulfilled.

2. The control apparatus (1) for a secondary battery (9) according to Claim 1, **characterized in that**
the first condition is not fulfilled when an internal resistance value of the secondary battery (9) continuously decreases, and
when restriction of the magnitude of the charge/discharge current is started, the controller (100) is configured to
acquire the internal resistance value after start of the driving source (3),
to update determination of the first condition based on an estimation value of the internal resistance value, and
to cancel, when the first condition is not fulfilled after update, the restriction of the magnitude of the charge/discharge current.

3. The control apparatus (1) for a secondary battery (9) according to Claim 1 or 2, **characterized in that** the state sensor (120) further includes a resistance sensor (123) for measuring the internal resistance of the second battery (9), the resistance sensor (123) is electrically connected to the controller (100) to input a detection signal of the resistance sensor (123) into the controller (100) .

4. The control apparatus (1) for a secondary battery (9) according to any of Claims 1 to 3, **characterized in that**
the driving source (3) is a motor that is able to perform a powering operation and a regenerative operation, and
the controller is configured to restrict a regenerative current generated during a regenerative operation to be not more than a predetermined upper limit,

5. The control apparatus (1) for a secondary battery (9) according to any of Claims 1 to 4, **characterized in that**
the vehicle (v) is able to receive electricity at least through fast charging out of fast charging and normal charging, wherein fast charging includes receiving electric power supply not less than predetermined electric power from power supply equipment to charge the secondary battery (9) and normal charging includes receiving electric power supply less than the predetermined electric power from the power supply equipment to charge the secondary battery (6), and
the controller is further configured to restrict electricity supply through the fast charging, the controller restricts the magnitude of the charge/discharge current.

6. The control apparatus for a secondary battery according to any of Claims 1 to 5, **characterized by** comprising
a notification unit that is electrically connected to the controller and configured to notify an occupant of the vehicle of information, wherein
the notification unit is configured to
determine, based on the detection signal of the state sensor, presence or absence of an indication that the first condition is to be established, and
to notify, when it is determined that there is the indication, the occupant of information indicating that the first condition is going to be fulfilled.

7. The control apparatus for a secondary battery according to any of Claims 1 to 6, **characterized in that**
the plurality of battery cells, each having a plate shape, are disposed to line up in a vehicle front-rear direction in a state of being bound from both front and rear sides of the plate shape,
each of the plurality of battery cells is disposed such that a longitudinal direction is aligned along a vehicle width direction, a transverse direction is aligned along a vehicle height direction, and a thickness direction is aligned along the vehicle front-rear direction,
a dimension of each of the plurality of battery cells in the longitudinal direction exceeds 50% relative to a vehicle width of the vehicle, and
at both ends of each of the plurality of battery cells in the longitudinal direction, tabs corresponding to a positive electrode and a negative electrode of the battery cell are disposed.

8. The control apparatus for a secondary battery according to any of Claims 1 to 7, wherein the controller is configured to determine that the first condition is fulfilled, when the SOC and the temperature are continuously not less than predetermined values.

9. The control apparatus for a secondary battery (9) according to Claim 8, wherein the controller (100) includes an evaluation value determination unit(101), the evaluation value determination unit (101) being configured to calculate an evaluation value that increases in accordance with a time period during which a second condition is fulfilled, the second condition being fulfilled when the SOC is not less than a first threshold T1 and the temperature is not less than a second threshold T2.

10. The control apparatus according to Claim 9, wherein the evaluation value determination unit (101) is configured to determine that the first condition is fulfilled when the evaluation value exceeds a predetermined third threshold T3.

11. The control apparatus according to any of claims 1 to 10, **characterized in that** the controller (100) is configured to restrict the magnitude of a discharge current by decreasing the number of battery cells (91) of the secondary battery (9) connected to a converter (6) for stepping down high voltage DC electric power supplied from the secondary battery (9) to the driving source (3) and/or by increasing the amount of step-down of the high voltage DC electric power supplied from the secondary battery (9) at the converter (6).

12. The control apparatus according to any of claims 1 to 11, **characterized in that** the controller (100) is configured to restrict the magnitude of a charge current by prohibiting fast charging through an external electricity supply and to allow only normal charging.

13. A vehicle including a driving source (3) for driving the vehicle and a secondary battery (9) including a plurality of battery cells (91) for providing electric power to the driving source (3), the vehicle further comprising a control apparatus according to any of the preceding claims.

14. A method for supplying electric power from a secondary battery to a driving source of a vehicle (v), the secondary battery including a plurality of battery cells (91), the method including the steps of
Detecting by a state sensor (120) at least one of an SOC and a temperature of the secondary battery (9);
in a state of disconnection of electric power supply to the driving source (3), determining, based on the detection signal of the state sensor (120), whether or not a first condition is fulfilled, the first condition being fulfilled when at least one of the SOC and the temperature is continuously not less than a predetermined value, and
restricting, when it is determined that the first condition is fulfilled, a magnitude of the charge/discharge current more than in a case where the first condition is not fulfilled.

15. The method of claim 14, **characterized in that** the method is performed by a control apparatus according to any of Claims 1 to 12.
